Europäisches Patentamt

European Patent Office

Office européen des brevets

(19)

(11) Publication number: **0 031 208**
**B1**

(12) **EUROPEAN PATENT SPECIFICATION**

(45) Date of publication of patent specification: 27.04.83

(51) Int. Cl.³: **C 04 B 31/10, C 04 B 21/00**

(21) Application number: 80304323.1

(22) Date of filing: 02.12.80

(54) Process for the manufacture of a porous sintered aggregate.

(30) Priority: 24.12.79 GB 7944401

(43) Date of publication of application:
01.07.81 Bulletin 81/26

(45) Publication of the grant of the patent:
27.04.83 Bulletin 83/17

(84) Designated Contracting States:
BE DE FR GB IT LU NL SE

(56) References cited:
DE - A - 2 114 017
DE - A - 2 246 788
DE - A - 2 423 096
DE - B - 3 817
DE - B - 2 060 699
GB - A - 1 186 685
GB - A - 1 390 914

(73) Proprietor: F.L. Smidth & Co. A/S
77 Vigerslev Allé
DK-2500 Valby Copenhagen (DK)

(72) Inventor: Fundal, Erling
c/o F.L. Smidth & Co. A/S. 77 Vigerslev Alle
Copenhagen (DK)

(74) Representative: Jackson, Peter Arthur et al,
GILL JENNINGS & EVERY 53 to 64, Chancery
Lane
London WC2A 1HN (GB)

Courier Press, Leamington Spa, England.

# 0 031 208

## Process for the manufacture of a porous sintered aggregate

The present invention relates to a process for the manufacture of a porous sintered aggregate from clay-like material with a minor carbon content.

In the present context, the term "clay-like material with a minor carbon content" is hereinafter defined as a material the main components of which are carbon and the oxides of Si, Al, Fe and Ca, in the following proportions : $SiO_2$: 35—70 per cent; $Al_2O_3$: 15—35 per cent; Fe (calculated as $Fe_2O_3$): 3—30 per cent; CaO: 1—10 per cent; and C: 1—15 per cent.

Examples of such material are both unburnt waste materials, such as coal shale, and burnt waste materials comprising coal ash and coal ash slag produced by combustion of non lignitic coal.

During the combustion of coal, e.g. in power stations, the coal ash is distributed into two fractions, bottom ash collected from the bottom of the combustion chamber, and fly ash collected from the stack gases by air pollution control equipment. The older types of furnaces based on the stoker principle transform most of the ash content into coal ash slag.

Coal ash as well as coal ash slag are composed largely of silica, alumina, iron oxides, lime and carbon. The average analysis varies considerably depending on the type of coal in question and the burning conditions, but usually falls within the abovementioned range. Since the components have been exposed to a high temperature, the oxides are in general fused into a glass.

Typically from 10 to 85 per cent of the total coal ash production of a power station, is in the form of fly ash, and occurs as spherical particles, normally ranging in diameter from 0.5 to 100 $\mu$m. The colour depends on the carbon content and varies from light tan to black.

The particles of the bottom ash are coarser than those of the fly ash and its colour varies from gray to black.

Coal ash slags are ashes which have been sintered and air cooled. Typical dimensions of slag particles are 80—100 mm and their colour varies from gray to black.

These waste materials represent an increasing disposal problem, and many suggestions have been made for using these materials when manufacturing aggregates for various purposes in the building industry.

British Patent Specification No. 972851 discloses a process for the production of aggregates from pulverised fuel ash, finely divided slag, or shale or any mixture of such materials, which includes the steps of mixing such materials with water and clay, dividing the mix into granules and preheating and sintering these granules in a rotary kiln. It is further known to use a travelling grate sintering machine for the abovementioned heat treatment.

However, two serious problems present themselves both when using a rotary kiln and a travelling grate machine. Firstly the ash typically exhibits small variations in chemical composition, leading to varying sintering temperatures with a resultant tendency of the granules to fuse together. Secondly, it is difficult to produce a carbon-free product because of diffusion problems. Proper carbon removal necessitates diffusion of air into the granules to such an extent that all the fine coke particles distributed through the granules can be burnt away. However, this diffusion is seriously obstructed by the rather compact structure of the granules.

DE—A—24 23 096 concerns a corresponding process for the production of expanded aggregates from fly ash, including the steps of mixing the fly ash with water, dividing the mixture into granules, drying these granules and heating them at 1000—1450°C. According to the specification an expansion amounting to 20—500 volume per cent can be achieved by the burning step. This process presents the same fusion and carbon removal problems as referred to above.

The object of the present invention is to provide a process for the manufacture of a new sintered product made from clay-like material with a minor carbon content, exhibiting form stability during sintering, high compressive strength and a colour acceptable for use as building bricks as well as for structural fill, which material can be manufactured without addition of substantial amounts of correction materials.

It has now been found that the object can be achieved by a process which is characterized by preparing a raw mixture comprising fine clay-like material with a minor carbon content (as hereinbefore defined), and fine calcareous material consisting predominantly of $CaCO_3$ in proportions such that the weight ratio of total CaO over total $Al_2O_3$ in the mixture lies within the range 0.35—1.00, preferably equal to 0.55, the weight ratio of total $SiO_2$ over total CaO is greater than 1.5, and the weight ratio of total $SiO_2$ over total $Al_2O_3$ is greater than 1.0; preheating the mixture at substantially 850°C until the calcareous materials are calcined and the carbon oxidized, and sintering the preheated mixture in a neutral to slightly oxidizing atmosphere at a temperature within the range 1050—1250°C.

The only restriction on the components of the raw mixture is that the raw mixture has a composition falling within the above limits when the two components are mixed, i.e. that the clay-like material with a minor carbon content has a sufficiently high $SiO_2$ content and a sufficiently low CaO content. In the case of practically all relevant clay-like materials with a minor carbon content, these requirements will be met if limestone with a suitably high $CaCO_3$ content is used as the calcareous material.

2

As fine clay-like material with a minor carbon content, there may be used, for example, fine preferably ground, coal ash, preferably of a fineness which is defined by the sieve residue on a 90 $\mu$m screen being smaller than 15 per cent.

It is particularly advantageous to use fly ash, because it requires no grinding since it already has a fineness appropriate for a homogeneous sintering of the mixture. It is a further advantage of fly ash that the original iron compounds in the coal ash are separated from the other oxides when passing through the coal flame and occur in the fly ash as small spheres consisting of elementary Fe or FeO. The product of the process according to the invention maintains this state which contributes to giving the products is characteristic properties.

As fine calcareous material there may be used chemically precipitated $CaCO_3$, e.g. waste products containing such $CaCO_3$, ground limestone, or domomitic limestone, preferably having a total carbonate content of more than 96 per cent, and preferably having a fineness defined by the sieve residue on a 90 $\mu$m screen being less than 15 per cent. Furthermore, dust precipitated in electrostatic kiln gas filters from cement factories, having up to now presented serious disposal problems, can be used as fine calcareous material.

Total CaO comprises all Ca compounds (including $CaCO_3$) in the raw mixture calculated as CaO.

The volumetric change by the sintering of the raw mixture has proved to be so small that the raw mixture can be pressed to green bricks prior to the sintering, which bricks undergo no shrinkage or expansion during preheating and sintering.

The carbon content of the clay-like material with a minor carbon content is not high, i.e. less than 15 per cent. The resultant product will have a whitish to light tan colour.

The advantageous colour is due to two circumstances which are both dependent upon the presence of $CaCO_3$ in the raw mixture. Firstly, efficient removal of the fine coke particles in the raw mixture is obtained, as removal does not depend solely on diffusion of oxygen through the pellets or bricks, but is effected by formation of CO by reaction between the fine coke particles and the $CO_2$ liberated when calcining the omnipresent $CaCO_3$. Secondly, the composition of the raw mixture ensures formation of a sintering product containing a large amount of small anorthite crystals ($CaO . Al_2O_3 . 2SiO_2$) which reflect the light and hence cause the light colour.

If it is desired to manufacture aggregates in the form of pellets the raw mixture can, if desired after addition of 1—10, preferably 4—5 per cent water, be pressed into pellets or nodules prior to preheating and sintering which may be carried out in a grate heater or a tunnel kiln. Preferably, a rotary kiln is used, which may be provided with a cyclone or grate preheater. It is also possible to omit pelletizing/nodulizing the raw mixture and introduce the raw mixture directly into the rotary kiln in which it will nodulize to clinker during the sintering step.

If desired, the raw mixture may comprise small amounts, e.g. 5 per cent, diatomaceous earth or clay. By this is achieved improved stability of the green pellets or bricks.

If desired, the sintering temperature may be lowered by adding small amounts, e.g. 1—5 per cent, fluxing agents to the raw mixture. As fluxing agents may be used alkali metal compounds, particularly carbonates and oxides of potassium and sodium.

If it is desired to manufacture aggregates in the form of bricks, the raw mixture is pressed into bricks prior to the heat treatment.

When manufacturing bricks it may be advantageous to operate with a raw mixture to which is added as much as 70 or even 80 per cent ground sintered aggregates formed by a process according to the invention, i.e. by a production process analogeous to the one used when manufacturing firebricks. This product has the advantage as compared with e.g. chamotte, that it exhibits less reactivity towards CaO.

The preheating is carried out at substantially 850°C, i.e. within the temperature range 750—900°C preferably at 800—850°C. The period of preheating depends upon the shape and size of the pellet/brick. Pellets with dimensions not exceeding 2 cm are preheated in 30 to 60 minutes at the stated temperature. The pellets are gradually heated to the preheating temperatures in the course of an hour.

The sintering which is carried out in an ordinary kiln gas atmosphere, i.e. with a content of 3—7 per cent $O_2$, occurs within the temperature range 1050 to 1250°C, preferably between 1100 and 1200°C. The bodies are finished when the entire specimen has reached the required sintering temperature; for instance, a retention time of 6 minutes is sufficient for specimens of up to 2 g when fed directly to the burning zone. Longer sintering periods are not detrimental to the properties of the product.

The cooling sequence plays no role with respect to properties of the product, and it is carried out in the most economic way.

Aggregates made by a process according to the invention are suited for use as light filler in concrete, in cement bonded bricks, as filler in asphalt, as basic material when manufacturing ceramic stones, as artificial gravel, e.g. for tennis courts, and as absorption material, e.g. for oil. Further, in a ground state, they can be used as filler in cement.

The invention will now be illustrated by means of a number of examples and comparative examples, in which per cent means per cent by weight.

Example 1 (according to the invention)
From a fly ash, having the following metal oxide analysis:

| | |
|---|---|
| $SiO_2$ | 49.0 per cent |
| $Al_2O_3$ | 19.8 „ „ |
| $Fe_2O_3$ | 8.7 „ „ |
| CaO | 5.5 „ „ |
| MgO | 2.8 „ „ |
| $K_2O$ | 2.0 „ „ |
| $Na_2O$ | 0.9 „ „ |
| Ignition loss | 8.1 „ „ |

and a C content of 7.1 per cent by weight of the fly ash of the following fineness:

| micrometer | +250 | 250—180 | 180—90 | 90—63 | 63—45 | 45—16 | —16 |
|---|---|---|---|---|---|---|---|
| per cent | 1.8 | 2.7 | 9.2 | 5.5 | 5.8 | 22.2 | 52.8 |

was made in a mixture with 13.6 per cent chemically precipitated $CaCO_3$ (analytical reagent quality). The mixture was homogenized for 1 hour.
The result was a raw mixture with

| | | |
|---|---|---|
| total CaO/total $Al_2O_3$ | = | 0.66 |
| total $SiO_2$/total CaO | = | 3.74 |
| total $SiO_2$/total $Al_2O_3$ | = | 2.47 |

4 per cent water having been added, the mixture was pressed into tablets of approx. 1 cm³, which after 1 hour of preheating at 850°C were sintered for 15 min at 1150°C.
The resulting product was light cream in colour. The product compression strength measured on small specimens (cylindrical cross-sectional area of 1 cm²) was 19600 kPa (200 kp/cm²).
Microscopic examination of porosity showed

| | |
|---|---|
| Volume per cent closed pores | 5.5 per cent |
| Volume per cent open pores | 34.3 „ „ |
| Volume per cent total porosity | 39.8 per cent |

Weight per unit of volume determined by measurement and weighing 1.2 g/cm³
Shrinkage due to heat treatment: 1.8 per cent.

Example 2 (according to the invention)
Briquet ash having the following metal oxide analysis:

| | |
|---|---|
| $SiO_2$ | 53.5 per cent |
| $Al_2O_3$ | 32.1 „ ., |
| $Fe_2O_3$ | 4.1 „ „ |
| CaO | 0.9 „ „ |
| MgO | — |
| $K_2O$ | 4.7 „ „ |
| $Na_2O$ | 0.6 „ „ |
| Ignition loss | 11.2 „ „ |

and a C content of 8.7 per cent by weight of ash was mixed with 29 per cent limestone having a total carbonate content of 96 per cent. The mixture was interground to a fineness of 11 percent sieve residue on a 90 $\mu$m screen.
The resulting raw mixture composition was

| | | |
|---|---|---|
| total CaO/total $Al_2O_3$ | = | 0.52 |
| total $SiO_2$/total CaO | = | 3.23 |
| total $SiO_2$/total $Al_2O_3$ | = | 1.67 |

Tablets of 1.5 cm³ were pressed after addition of 4 per cent water; the tablets were preheated at 850°C for 45 min and then sintered at 1150°C for 15 min.
The resultant product was cream-coloured and had a compression strength of 7360 kPa (75 kp/cm²) and a weight per unit of volume of 1.15 g/cm³.
Shrinkage due to heat treatment was —0.5 per cent (i.e. slight expansion).

4

Example 3 (according to the invention)

From a fly ash having the following metal oxide analysis:

| | |
|---|---|
| $SiO_2$ | 46.4 per cent |
| $Al_2O_3$ | 22.0 „ „ |
| $Fe_2O_3$ | 9.6 „ „ |
| CaO | 7.6 „ „ |
| MgO | 5.4 „ „ |
| $K_2O$ | 2.3 „ „ |
| $Na_2O$ | 0.6 „ „ |
| Ignition loss | 4.7 „ „ |

and a C content of 4.3 per cent by weight of ash having the following fineness

| Micrometer | +250 | 250—180 | 180—90 | 90—63 | 63—45 | 45—16 | —16 |
|---|---|---|---|---|---|---|---|
| per cent | 4.2 | 4.7 | 14.8 | 6.0 | 6.1 | 26.6 | 36.7 |

was made a mixture with 11.3 per cent chemically precipitated $CaCO_3$ (analytical reagent quality). The mixture was homogenized for 1 hour.

The resultant raw mixture composition was

| | | |
|---|---|---|
| total CaO/total $Al_2O_3$ | = | 0.63 |
| total $SiO_2$/total CaO | = | 3.34 |
| total $SiO_2$/total $Al_2O_3$ | = | 2.10 |

The mixture was pressed into tablets of approx. 1 cm³ after addition of 4 per cent water; after 1 hour's preheating at 850° the tablets were sintered for 6 min at 1050, 1150, 1250°C respectively. For purposes of comparison sintering at 1300°C was also carried out.

The product properties appear from the following Table 1:

TABLE 1

| Sintering temperature °C | Open pores volume per cent | Closed pores volume per cent | Compress strength kPa (kp/cm²) | Total inner surface mm²/mm³ | Shrinkage per cent | Colour |
|---|---|---|---|---|---|---|
| 1050 | 22.0 | 3.7 | 9320 (95) | 210 | 1.6 | light tan |
| 1150 | 25.4 | 4.1 | 18630 (190) | 166 | 1.6 | tan |
| 1250 | 41.0 | 3.0 | 17650 (180) | 26 | 2.4 | dark tan |

Microscopic examinations of the products sintered according to the invention at 1050, 1150 and 1250°C show a structure similar to the structure of expanded clay with small balls of Fe and iron oxides. X-ray diffraction was used for examination of the mineral composition of the specimens:

Product sintered at 1050°C: Quartz, Anorthite, Gehlenite, Mullite, Haematite, Anhydrite.

Product sintered at 1150°C: Anorthite, Haematite, Quartz.

Product sintered at 1250°C: Anorthite, Quartz.

Quartz and Haematite derive from unmolten particles in the fly ash. The specimens melt at 1300°C.

Example 4 (according to the invention)

Coal shale having the following metal oxide analysis:

| | |
|---|---|
| $SiO_2$ | 41.9 per cent |
| $Al_2O_3$ | 21.8 „ „ |
| $Fe_2O_3$ | 5.7 „ „ |
| CaO | 1.5 „ „ |
| MgO | 1.2 „ „ |
| $K_2O$ | 3.4 „ „ |
| $TiO_2$ | 0.8 „ „ |
| Ignition loss | 21.5 „ „ |

and a C content of 12.0 per cent by weight of shale was interground with 23.3 per cent chemically precipitated $CaCO_3$ (analytic reagent quality) to a 10 per cent sieve residue on a 90 micron screen.

The resultant raw mixture composition was given by

total CaO/total $Al_2O_3$      =   0.66
total $SiO_2$/total CaO      =   2.91
total $SiO_2$/total $Al_2O_3$      =   1.92

Tablets of approx. 1 cm³ were pressed after addition of 4 per cent water; the tablets were preheated at 850°C for 1 hour and then sintered for 15 min at the temperature below.

The results of measurement of compression strength and carbon residue appear from Table 2.

TABLE 2

| Sintering temperature °C | Compress. strength kPa (kp/cm²) | Residue carbon content per cent |
|---|---|---|
| 1100 | 22600 (230) | 0.004 |
| 1150 | 35300 (360) | 0.09 |
| 1200 | 30400 (310) | 0.08 |

The sintered products were light coloured and completely resembled the sintered products based on fly ash.

Microscopic examinations show a finished sintered structure which very much resembles the structure described for sintered fly ash.

The product sintered at 1100°C has a fine net-like structure and contains spherical iron oxide particles. With increasing temperature, the "network" gets coarser and at 1200°C resulting in closed pores. The iron remains as spherical iron oxide particles.

The unit weight was determined at 1.3 g/cm³, and no sample shrinkage was noted. (i.e. less than 1 per cent).

Example 5 (according to the invention)

Chemically precipitated $CaCO_3$ (analytic reagent quality) in amounts as stated below was added to fly ash with properties and composition as stated in Example 3. 4 per cent water was added to the mixture, and tablets of approx. 1 cm³ were pressed.

The tablets were preheated at 850°C for 1 hour, and subsequently sintered for 15 minutes at 1200°C.

The compression strength of the tablets was tested and the weight per unit of volume determined by 'measuring and weighing. The mineral composition was examined by X-ray diffraction. The test results appear from Table 3 below.

TABLE 3
Chemical composition of raw mixture

| Per cent $CaCO_3$ addition | Weight per unit volume g/cm³ | Compression strength kPa (kp/crn²) | $SiO_2$/ $Al_2O_3$ | CaO/ $Al_2O_3$ | $SiO_2$/ CaO |
|---|---|---|---|---|---|
| 4.3 | 1.46 | 17650 (180) | 2.1 | 0.46 | 4.58 |
| 5.9 | 1.47 | 20600 (210) | 2.1 | 0.51 | 4.26 |
| 6.9 | 1.45 | 17850 (182) | 2.1 | 0.54 | 3.93 |
| 8.7 | 1.45 | 14700 (150) | 2.1 | 0.59 | 3.59 |
| 11.1 | 1.42 | 14200 (145) | 2.1 | 0.66 | 3.19 |
| 13.8 | 1.42 | 14700 (150) | 2.1 | 0.75 | 2.82 |
| 17.4 | 1.40 | 12750 (130) | 2.1 | 0.88 | 2.39 |

The only minerals found in the specimens were Anorthite, Quartz and Haematite. Quartz and Haematite derive from unmolten particles in fly ash.

Shrinkage in respect of all the specimens was 1.8 per cent.

Example 6 (according to the invention)

From a fly ash having the following metal oxide analysis:

| | | |
|---|---|---|
| $SiO_2$ | 45.2 | per cent |
| $Al_2O_3$ | 26.6 | „   „ |
| $Fe_2O_3$ | 6.8 | „   „ |
| CaO | 7.1 | „   „ |
| MgO | 3.0 | „   „ |
| $K_2O$ | 1.7 | „   „ |
| $Na_2O$ | 0.5 | „   „ |

# 0 031 208

an ignition loss of 6.0 per cent and a C content of 4.6 per cent was made a mixture with varying amounts of dust precipitated in an electrostatic filter filtering exhaust gas from a cement production plant. The dust had the following metal oxide analysis:

| | |
|---|---|
| $SiO_2$ | 15.5 per cent |
| $Al_2O_3$ | 4.4 „ „ |
| $Fe_2O_3$ | 1.8 „ „ |
| $CaO$ | 41.0 „ „ |
| $MgO$ | 1.1 „ „ |
| $K_2O$ | 4.9 „ „ |
| $Na_2O$ | 1.0 „ „ |

an ignition loss of 23.5 per cent, a Cl content of 0.7 percent and a S content of 2.0 per cent.
The mixture has a fineness of 4 per cent sieve residue on a 90 $\mu$m screen.
Tablets of 1 $cm^3$ were pressed after addition of 4 per cent water; the tablets were preheated at 850°C for 45 min and then sintered at various temperatures for 15 min.
The chemical composition and the product properties appear from the following Table 4:

### TABLE 4 (part 1)
### Chemical composition

| Percent filter dust addition | $CaO/Al_2O_3$ | $SiO_2/CaO$ | $SiO_2/Al_2O_3$ |
|---|---|---|---|
| 13.6 | 0.47 | 3.7 | 1.74 |
| 16.3 | 0.50 | 3.5 | 1.75 |
| 19.0 | 0.54 | 3.2 | 1.76 |
| 22 | 0.58 | 3.0 | 1.76 |
| 25 | 0.63 | 2.8 | 1.77 |

### TABLE 4 (part 2)

| Per cent filter dust addition | Sintering temp. °C | Weight per unit vol. g/$cm^3$ | Shrinkage per cent | Compress. strength kPa (kp/$cm^3$) | $SO_3$ per cent |
|---|---|---|---|---|---|
| 13.6 | 1150 | 1.39 | 0 | 20600 (210) | 0.63 |
| 13.6 | 1175 | 1.40 | 0 | 23500 (240) | 0.25 |
| 13.6 | 1200 | 1.46 | 1.8 | 35300 (360) | 0.05 |
| 16.3 | 1150 | 1.39 | 0 | 18630 (190) | 0.60 |
| 16.3 | 1175 | 1.39 | 0 | 26500 (270) | 0.30 |
| 16.3 | 1200 | 1.47 | 1.8 | 34800 (355) | 0.05 |
| 19.0 | 1150 | 1.38 | 0 | 18140 (185) | 0.70 |
| 19.0 | 1175 | 1.41 | 0.9 | 21100 (215) | 0.28 |
| 19.0 | 1200 | 1.44 | 1.8 | 36300 (370) | 0.03 |
| 22.0 | 1150 | 1.37 | 0 | 16700 (170) | 0.75 |
| 22.0 | 1175 | 1.41 | 0.9 | 20100 (205) | 0.22 |
| 22.0 | 1200 | 1.48 | 2.7 | 31400 (320) | 0.05 |
| 25.0 | 1150 | 1.38 | 0 | 22070 (225) | 0.82 |
| 25.0 | 1175 | 1.41 | 0.9 | 27460 (280) | 0.33 |
| 25.0 | 1200 | 1.50 | 2.7 | 47600 (485) | 0.05 |

The impurity content of alkali metal oxides and sulphur is characteristic of the filter dust used. These impurities however do not influence the product properties in a negative way as they will be insolubly integrated in the product.

This is because preheating at 850°C is a reducing burning reaction. The alkali sulphates are decomposed and the alkalis are integrated into low melt silicate glasses.

As the zone for calcining and burning of carbon advances towards the core of the tablets, a diffusion of $SO_3$ and $CO/CO_2$ takes place in the opposite direction. Part of the $SO_3$ will be absorbed as anhydrite which starts decomposing from 1200°C and upwards. The alkalis remain as silicates, Na is built into the anorthite and K is integrated in aluminasilicate; i.e., neither $SO_3$ nor the alkalis are watersoluble any longer.

Example A (comparative example)
51 Per cent clay of the following metal oxide analysis was added to the briquet ash described in Example 2:

7

| | | |
|---|---|---|
| $SiO_2$ | 49.5 per cent | |
| $Al_2O_3$ | 17.7 „ „ | |
| $Fe_2O_3$ | 9.1 „ „ | |
| CaO | 4.4 „ „ | |
| MgO | 2.7 „ „ | |
| $K_2O$ | 2.8 „ „ | |
| $Na_2O$ | 0.7 „ „ | |
| $TiO_2$ | 0.9 „ „ | |
| Ignition loss | 10.9 „ „ | |

The mixture was ground and homogenized as described in Example 2.
The resulting mixture composition was

| | | |
|---|---|---|
| total CaO/total $Al_2O_3$ | = | 0.10 |
| total $SiO_2$/total CaO | = | 19.8 |
| total $SiO_2$/total $Al_2O_3$ | = | 2.06 |

The mixture was pressed into tablets which were heat treated as described in Example 2.

The resultant product was dark brown, expanded and of very uneven shape. During the sintering the product exhibited a strongly adhesive surface which makes it difficult to handle.

Example B (comparative example)

$CaCO_3$ in the amounts specified below was added to the fly ash described in Example 3.

$CaCO_3$ addition was chemically precipitated analytic reagent quality.

4 Per cent water was added to the mixture and tablets of approx. 1 $cm^3$ were pressed. The tablets were preheated at 850°C for 1 hour and subsequently sintered at 1200°C for 15 minutes.

The compression strength of the tablets was tested and the weight per unit of volume determined by measuring and weighing. The mineral content was determined by means of X-ray diffraction. The test results appear from Table 5 below.

TABLE 5 (part 1)
Chemical composition

| Percent $CaCO_3$ | $CaO/Al_2O_3$ | $SiO_2/CaO$ | $SiO_2/Al_2O_3$ |
|---|---|---|---|
| 3.0 | 0.43 | 4.9 | 2.1 |
| 11.3 | 0.67 | 3.2 | 2.1 |
| 40 | 2.05 | 1.03 | 2.1 |
| 70 | 2.99 | 0.33 | 2.1 |

TABLE 5 (part 2)

| Per cent $CaCO_3$ | W. per u.v. g/cm³ | Per cent shrinkage | Compression strength kPa (kp/cm²) | Colour | Mineral content |
|---|---|---|---|---|---|
| 3.0 | 1.45 | 1.7 | 20100 (205) | Whitish | Anorthite Quartz Haematite |
| 11.3 | 1.45 | 1.7 | 14700 (150) | — | Anorthite Quartz Haematite |
| 40.0 | molten | — | — | Black | Gehlenite Anorthite |
| 70 | 1.34 | 5.6 | 8830 (90) | Mottled | Gehlenite |

Quartz derives from unreacted coarse particles in fly ash.

The first two of the examples in Table 5, i.e. those with 3 and 11.3 per cent $CaCO_3$ were in accordance with the invention.

**Claims**

1. A process for the manufacture of a porous sintered aggregate characterized by preparing a raw mixture comprising fine clay like material with a minor carbon content the main components of which are carbon and the oxides of Si, Al, Fe and Ca, in the following proportions: $SiO_2$: 35—70 per cent by weight; $Al_2O_3$: 15—35 per cent by weight; Fe (calculated as $Fe_2O_3$): 3—30 per cent by weight; CaO: 1—10 per cent by weight; and C: 1.15 per cent by weight, and fine calcareous material consisting predominantly of $CaCO_3$ in proportions such that the weight ratio of total CaO over total $Al_2O_3$ in the mixture lies within the range 0.35—1.00, the weight ratio of total $SiO_2$ over total CaO is greater than 1.5, and the weight ratio of total $SiO_2$ over total $Al_2O_3$ is greater than 1.0; preheating the mixture at substantially 850°C until the calcareous materials are calcined and the carbon oxidized, and sintering the preheated mixture in a neutral to slightly oxidizing atmosphere at a temperature within the range 1050—1250°C.

2. A process according to Claim 1, characterized in that the weight ratio of total CaO over total $Al_2O_3$ in the mixture is equal to 0.55.

3. A process according to Claim 1 or Claim 2, characterized in that the sintering step is carried out at a temperature within the range 1100—1200°C.

4. A process according to any of Claims 1 to 3, characterized in that the raw mixture is nodulized or pelletized before preheating and sintering.

5. A process according to any of Claims 1 to 4, characterized in that the raw mixture is pressed to bricks before preheating and sintering.

6. A process according to any of Claims 1 to 4, characterized in that the preheating and sintering steps are carried out in a rotary kiln.

7. A process according to any of Claims 1 to 5, characterized in that the preheating and sintering steps are carried out in a grate heater.

8. A process according to any of the preceding claims, characterized in that the fine clay-like material with a minor carbon content is fine coal ash.

9. A process according to any of Claims 1 to 7, characterized in that the fine clay-like material with a minor carbon content is fly ash.

10. A process according to any of the preceding claims, characterized in that the fine calcareous material is chemically precipitated $CaCO_3$.

## Patentansprüche

1. Verfahren zur Herstellung eines porösen, gesinterten Aggregats, gekennzeichnet, durch Ansetzen einer Rohmischung enthaltend feines lehmartiges Material mit einem geringen Kohlenstoffgehalt, dessen Hauptbestandteile Kohlenstoff und die Oxide von Si, Al, Fe und Ca in den nachfolgenden Anteilen sind: $SiO_2$: 35 bis 70 Gew.-%; $Al_2O_3$: 15 bis 35 Gew.-%; Fe (berechnet aus $Fe_2O_3$): 3 bis 30 Gew.-%; CaO: 1 bis 10 Gew.-% und C: 1,15 Gew.-%, und feines, kalkhaltiges Material bestehend überwiegend aus $CaCO_3$ in solchen Anteilen, daß das Gewichtsverhältnis des gesamten CaO gegenüber dem gesamten $Al_2O_3$ in der Mischung im Bereich von 0,35 bis 1,00 liegt, das Gewichtsverhältnis des gesamten $SiO_2$ gegenüber dem gesamten CaO größer als 1,5 ist und das Gewichtsverhältnis des gesamten $SiO_2$ gegenüber dem gesamten $Al_2O_3$ größer als 1,0 ist, durch Vorwärmen der Mischung bei im wesentlichen 850°C, bis die kalkhaltigen Materialien kalziniert und der Kohlenstoff oxidiert ist, und durch Sintern der vorerwärmten Mischung in einer neutralen bis schwach oxidierenden Atmosphäre bei einer Temperatur im Bereich von 1050 bis 1250°C.

2. Verfahren nach Anspruch 1, dadurch gekennzeichnet, daß das Gewichtsverhältnis des gesamten CaO gegenüber dem gesamten $Al_2O_3$ in der Mischung gleich 0,55 ist.

3. Verfahren nach Anspruch 1 oder Anspruch 2, dadurch gekennzeichnet, daß der Sinterungsschritt bei einer Temperatur im Bereich von 1100 bis 1200°C ausgeführt wird.

4. Verfahren nach einem der Ansprüche 1 bis 3, dadurch gekennzeichnet, daß die Rohmischung vor dem Vorwärmen und Sintern Agglomiert oder pelletisiert wird.

5. Verfahren nach einem der Ansprüche 1 bis 4, dadurch gekennzeichnet, daß die Rohmischung vor dem Vorwärmen und Sintern zu Briketts verpreßt wird.

6. Verfahren nach einem der Ansprüche 1 bis 4, dadurch gekennzeichnet, daß die Vorwärm- und Sinterschritte in einem Drehofen ausgeführt werden.

7. Verfahren nach einem der Ansprüche 1 bis 5, dadurch gekennzeichnet, daß die Vorwärm- und Sinterschritte in einem Rosterwärmer ausgeführt werden.

8. Verfahren nach einem der vorhergehenden Ansprüche, dadurch gekennzeichnet, daß das feine, lehmartige Material mit einem geringen Kohlenstoffgehalt feine Steinkohlenasche ist.

9. Verfahren nach einem der Ansprüche 1 bis 7, dadurch gekennzeichnet, daß das feine, lehmartige Material mit einem geringen Kohlenstoffgehalt Flugasche ist.

10. Verfahren nach einem der vorhergehenden Ansprüche, dadurch gekennzeichnet, daß das feine, kalkhaltige Material chemisch ausgefälltes $CaCO_3$ ist.

## Revendications

1. Procédé de fabrication d'un agrégat poreux fritté, procédé caractérisé en ce qu'on prépare un mélange brut ou cru comprenant une matière fine analogue à de l'argile, à teneur minime en carbone, dont les principaux constituants sont le carbone et les oxydes de Si, Al, Fe et Ca, selon les proportions suivantes: $SiO_2$: 35 à 70- en poids; $Al_2O_3$: 15 à 35% en poids; Fe(calculé en $Fe_2O_3$): 3 à 30% en poids; CaO: 1 à 10% en poids; et C: 1,15% en poids, et une fine matrière calcaire consistant surtout en $CaCO_3$ en des proportions telles que le rapport pondéral de CaO total par rapport à $Al_2O_3$ total dans le mélange se situe entre 0,35 et 1,00, le rapport pondéral de $SiO_2$ total à CaO total est supérieur à 1,5 et le rapport pondéral de $SiO_2$ total à $Al_2O_3$ total est supérieur à 1,0; on préchauffe le mélange à 850°C essentiellement jusqu'à calcination des matières calcaires et oxydation du carbone, et l'on fritte le mélange préchauffé, dans une atmosphère neutre à légèrement oxydante, à une température se situant dans l'intervalle de 1050 à 1250°C.

2. Procédé selon la revendication 1, caractérisé en ce que le rapport pondéral du $CaO_2$ total à $Al_2O_3$ total est égal dans le mélange à 0,55.

3. Procédé selon la revendication 1 ou la revendication 2, caractérisé en ce que l'étape de frittage est réalisée à une température se situant dans l'intervalle compris entre 1100 et 1200°C.

4. Procédé selon l'une quelconque des revendications 1 à 3, caractérisé en ce que, avant le préchauffage et le frittage, le mélange brut est soumis à formation de nodules ou de comprimés.

5. Procédé selon l'une quelconque des revendications 1 à 4, caractérisé en ce que, avant le préchauffage et le frittage, le mélange brut est comprimé en des briques.

6. Procédé selon l'une quelconque des revendications 1 à 4, caractérisé en ce que les étapes de préchauffage et de frittage sont effectuées dans un four rotatif.

7. Procédé selon l'une quelconque des revendications 1 à 5, caractérisé en ce que les étapes de préchauffage et de frittage sont effectuées dans un foyer à grille.

8. Procédé selon l'une quelconque des revendications précédentes, caractérisé en ce que la matière fine analogue à de l'argile et à teneur minime en carbone est de la cendre fine de charbon.

9. Procédé selon l'une quelconque des revendications 1 à 7, caractérisé en ce que la matière fine analogue à de l'argile à teneur minime en carbone est de la cendre volante.

10. Procédé selon l'une quelconque des revendications précédentes, caractérisé en ce que la matrière calcaire fine est du $CaCO_3$ précipité par voie chimique.